# EUROPEAN PATENT APPLICATION

(11) **EP 4 597 956 A1**
(43) Date of publication of application: **06.08.2025**
(21) Application number: 22960319.6
(22) Date of filing: 30.09.2022
(51) Int. Cl.: H04L 27/00

(54) **WIRELESS COMMUNICATION METHOD, AND DEVICES**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Mewburn Ellis LLP
(86) International application number: PCT/CN2022/123333
(87) International publication number: WO 2024/065700

(57) **Abstract**

A wireless communication method and a device are provided. The method includes: transmitting, by a first terminal based on a first signal, a second signal to a second terminal. The second signal is used to supply power to the second terminal, and the first signal is transmitted by a network device or a third terminal.

## Description

### TECHNICAL FIELD

Embodiments of the present application relate to the field of communications, and in particular, to a wireless communication method and a device.

### BACKGROUND

In a zero-power consumption communication, a zero-power consumption terminal needs to perform power harvesting to drive itself to operate for data transmission. Therefore, how to supply power to the zero-power consumption terminal is an urgent problem to be solved.

### SUMMARY

The present application provides a wireless communication method and a device. A network device may supply power to a second terminal through one or more terminals, thereby expanding coverage of a power supply signal and improving a power level of the power supply signal reaching the second terminal.

In a first aspect, a wireless communication method is provided, which includes: transmitting, by a first terminal based on a first signal, a second signal to a second terminal. The second signal is used to supply power to the second terminal, and the first signal is transmitted by a network device or a third terminal.

In a second aspect, a wireless communication method is provided, which includes: transmitting, by a network device, a first signal to a first terminal. The first signal is used for the first terminal to transmit a second signal, and the second signal is used to supply power to a second terminal.

In a third aspect, a wireless communication method is provided, which includes: transmitting, by a second terminal, first request information to a first terminal. The first request information is used to request the first terminal to transmit a power supply signal.

In a fourth aspect, a terminal device is provided, which is used to perform the method in the first aspect or its various implementations.

Specifically, the terminal device includes a functional module used to perform the method in the first aspect or its various implementations.

In a fifth aspect, a network device is provided, which is used to perform the method in the second aspect or its various implementations.

Specifically, the network device includes a functional module used to perform the method in the second aspect or its various implementation.

In a sixth aspect, a terminal device is provided, which is used to perform the method in the first aspect or its various implementations.

Specifically, the terminal device includes a functional module used to perform the method in the third aspect or its various implementations.

In a seventh aspect, a terminal device is provided, and the terminal device includes a processor and a memory. The memory is used to store a computer program, and the processor is used to invoke and run the computer program stored in the memory, to cause the terminal device to perform the method in the first aspect or its various implementations.

In an eighth aspect, a network device is provided, and the network device includes a processor and a memory. The memory is used to store a computer program, and the processor is used to invoke and run the computer program stored in the memory, to cause the network device to perform the method in the second aspect or its various implementations.

In a ninth aspect, a terminal device is provided, and the terminal device includes a processor and a memory. The memory is used to store a computer program, and the processor is used to invoke and run the computer program stored in the memory, to cause the terminal device to perform the method in the third aspect or its various implementations.

In a tenth aspect, a chip is provided, which is used to implement the method in any one of the first aspect to the third aspect or various implementations thereof. Specifically, the chip includes a processor, and the processor is used to invoke and run a computer program from a memory to cause a device on which the apparatus is mounted to perform the method in any one of the first aspect to the third aspect or various implementations thereof.

In an eleventh aspect, a computer readable storage medium is provided, which is used to store a computer program. The computer program causes a computer to perform the method in any one of the first aspect to the third aspect or various implementations thereof.

In a twelfth aspect, a computer program product is provided, which includes computer program instructions. The computer program instructions cause a computer to perform the method in any one of the first aspect to the third aspect or various implementations thereof.

In a thirteenth aspect, a computer program is provided, and the computer program, when executed on a computer, causes a computer to perform the method in any one of the first aspect to the third aspect or various implementations thereof.

Through the above technical solutions, the first terminal may transmit the second signal based on the first signal transmitted by the network device or the third terminal, so as to supply power to the second terminal. In this way, the network device and one or more terminals (for example, the first terminal, or the first terminal and the third terminal) supply power to the second terminal in a relay manner, thereby expanding the coverage of the power supply signal and improving the power level of the power supply signal reaching the second terminal.

### BRIEF DESCRIPTION OF THE DRAWINGS

FIG. 1 is a schematic diagram of a communication system architecture provided in the embodiments of the present application.
FIG. 2 is a schematic diagram of a zero-power consumption communication system according to an example of the present application.
FIG. 3 is a schematic diagram of power harvesting according to an embodiment of the present application.
FIG. 4 is a schematic diagram of backscatter communication according to an embodiment of the present application.
FIG. 5 is a schematic diagram of a circuit of resistive load modulation according to an embodiment of the present application.
FIG. 6 is a schematic diagram of supplying power to a zero-power consumption terminal by deploying power supply nodes.
FIG. 7 is a schematic diagram of a wireless communication method provided according to embodiments of the present application.
FIG. 8 is a schematic diagram of a network device expanding coverage of a power supply signal through a firs-type terminal.
FIG. 9 is a schematic diagram of a network device expanding coverage of a power supply signal through a plurality of levels of first-type terminals.
FIG. 10 is a schematic diagram of a first-type terminal transmitting a power supply signal based on certain spatial characteristics.
FIG. 11 is a schematic block diagram of a terminal device provided according to the embodiments of the present application.
FIG. 12 is a schematic block diagram of a network device provided according to the embodiments of the present application.
FIG. 13 is a schematic block diagram of another terminal device provided according to the embodiments of the present application.
FIG. 14 is a schematic block diagram of a communication device provided according to the embodiments of the present application.
FIG. 15 is a schematic block diagram of a chip provided according to the embodiments of the present application.
FIG. 16 is a schematic block diagram of a communication system provided according to the embodiments of the present application.

### DETAILED DESCRIPTION

Technical solutions in embodiments of the present application will be described below in conjunction with drawings of the embodiments of the present application. Obviously, the described embodiments are some but not all of the embodiments of the present application. All other embodiments obtained by those ordinary skilled in the art based on the embodiments of the present application without creative efforts shall fall within the protection scope of the present application.

The technical solutions of the embodiments of the present application may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (NTN) system, a universal mobile telecommunication system (UMTS), a wireless local area network (WLAN), a wireless fidelity (WiFi), a 5th-generation (5G) communication system, a cellular internet of things system, a cellular passive internet of things system or other communication systems.

Generally speaking, a limited number of connections supported by a traditional communication system is easy to implement. However, with the development of the communication technology, mobile communication system will support not only the traditional communication, but also, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems.

Optionally, the communication system in the embodiments of the present application may be applied to a carrier aggregation (CA) scenario, a dual connectivity (DC) scenario, or a standalone (SA) network deployment scenario.

Optionally, the communication system in the embodiments of the present application may be applied to an unlicensed spectrum, and the unlicensed spectrum may also be considered as a shared spectrum. Alternatively, the communication system in the embodiments of the present application may also be applied to a licensed spectrum, and the licensed spectrum may also be considered as an unshared spectrum.

The embodiments of the present application are described in conjunction with a network device and a terminal device. The terminal device may also be referred to as a user device (UE), an access terminal, a user unit, a user station, a mobile station, a mobile console, a remote station, a remote terminal, a mobile device, a user terminal, a terminal, a wireless communication device, a user agent or a user apparatus, or the like.

In the embodiments of the application, the network device may be a device used for communicating with a mobile device. The network device may be an access point (AP) in a WLAN, a base station such as base transceiver station (BTS) in a GSM or a CDMA, a base station such as NodeB (NB) in a WCDMA, an evolutional base station such as evolutional Node B (eNB or eNodeB) in an LTE, a relay station or an access point, a vehicle-mounted device, a wearable device, a network device (gNB) in an NR network, a network device in a cellular internet of things, a network device in a cellular passive internet of things, a network device in a future ecolution of PLMN or a network device in an NTN, or the like.

By way of example but not limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. Optionally, the network device may also be a base station provided on land, water, and other positions.

In the embodiments of the present application, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. Small cells here may include a metro cell, a micro cell, a pico cell, a femto cell, etc. These small cells have characteristics of small coverage and low transmit power, and are applicable for providing high-speed data transmission services.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a next-generation communication system such as a terminal device in an NR network, a terminal device in a future evolution of a public land mobile network (PLMN), a terminal device in a cellular internet of things, a terminal device in a cellular passive internet of things, or the like.

In the embodiments of the present application, the terminal device may be deployed on land, which includes indoor or outdoor, handheld, worn or vehicle-mounted device, and deployed on water (e.g., on a ship), or deployed in the air (e.g., on an airplane, a balloon, and a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

By way of example but not limitation, in the embodiments of the present application, the terminal device may also be a wearable device. The wearable device, which may be also referred to as a wearable smart device, is a generic term for devices that are wearable and developed by applying wearable technologies to intelligently design daily wears, such as glasses, gloves, watches, clothing, and shoes. The wearable device is a portable device that is worn directly on the body, or integrated into a user's clothing or accessories. The wearable device not only is a hardware device, but also achieves powerful functions through software support, data interaction and cloud interaction. In a broad sense, wearable smart devices include a fully-functioned, large-size device that can achieve all or partial functions without relying on a smartphone, e.g., a smartwatch or smart glasses, and a device that only focuses on a certain type of application function and needs to be used in conjunction with other devices such as a smartphone, e.g., various types of smart bracelets and smart jewelry for monitoring physical signs.

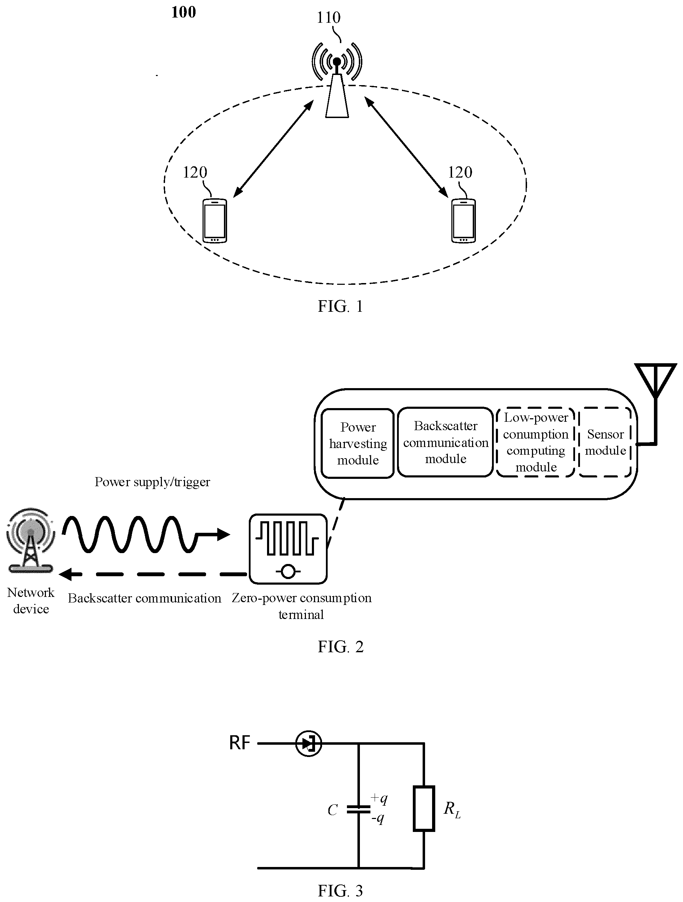

Exemplarily, a communication system 100 applied by the embodiments of the present application is shown in FIG. 1. The communication system 100 may include a network device 110, and the network device 110 may be a device that communicates with terminal devices 120 (also referred to as communication terminals or terminals). The network device 110 may provide communication coverage for a specific geographical area and may communicate with terminal devices located within the coverage area.

FIG. 1 exemplarily shows one network device and two terminal devices. Optionally, the communication system 100 may include a plurality of network devices, and there may be another number of terminal devices within coverage of each network device, which are not limited in the embodiments of the present application.

Optionally, the communication system 100 may further include other network entities such as a network controller and a mobility management entity, which are not limited in the embodiments of the present application.

It should be understood that, in the embodiments of the present application, a device with a communication function in a network/system may be referred to as a communication device. Taking the communication system 100 shown in FIG. 1 as an example, communication devices may include the network device 110 and the terminal device 120 that have the communication function, and the network device 110 and the terminal device 120 may be the specific devices described above, which will not be repeated heren. The communication devices may further include other devices in the communication system 100, such as a network controller, a mobility management entity, and other network entities, which are not limited in the embodiments of the present application.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

It should be understood that "indication" mentioned in the embodiments of the present application may mean a direct indication, or an indirect indication, or may represent an association. For example, A indicates B, which may mean that A directly indicates B (for example, B may be obtained by A) or may mean that A indirectly indicates B (for example, A indicates C, and B may be obtained by C), or may mean that there is an association between A and B.

In the description of the embodiments of the present application, the term "corresponding" may mean that there is a direct correspondence or indirect correspondence between two, or an association between the two, or may mean a relationship of indicating and being indicated or a relationship of configuring and being configured, etc.

In the embodiments of the present application, "predefined" may be implemented by pre-saving corresponding codes, tables or other manners that may be used for indicating related information, in the device (for example, including the terminal device and the network device), and the present application does not limit its specific implementation. For example, being predefined may refer to being defined in a protocol.

In the embodiments of the present application, the "protocol" may refer to a standard protocol in the field of communications, which may include, for example, an LTE protocol, an NR protocol, and related protocols applied in a future communication system, which is not limited in the present application.

To facilitate the understanding of the technical solutions in the embodiments of the present application, the relevant technologies of the present application are explained.

### Zero-power consumption communication

In recent years, application of a zero-power consumption terminal has become more and more widespread. A typical zero-power consumption device is a radio frequency identification (RFID) device, and RFID is a technology that uses spatial coupling of radio frequency signals to achieve automatic transmission and identification of contactless tag information. RFID tags are also called "radio frequency tags" or "electronic tags". Types of electronic tags are divided according to different power supply manners, which may include an active electronic tag, a passive electronic tag and a semi-passive electronic tag. The active electronic tag, also known as an auto electronic tag, refers to an electronic tag whose operating power is provided by a battery. The battery, a storage and an antenna together constitute the active electronic tag. Different from a passive radio frequency activation manner, the active electronic tag continues to transmit information through setting frequency band before the battery is replaced. The passive electronic tag, also known as an inactive electronic tag, which does not support a built-in battery. In a case where the passive electronic tag approaches a reader/writer, the tag is located in near field formed by radiation of a reader/writer antenna. A electronic tag antenna generates an induced current through electromagnetic induction, and the induced current drives an electronic tag chip circuit. The chip circuit transmits identification information stored in the tag to the reader/writer through the electronic tag antenna. The semi-active electronic tag inherits advantages of the passive electronic tag, such as small size, light weight, low price and long service life. The built-in battery provides power only for a small number of circuits in the chip in a case where there is no reader/writer access. The built-in battery supplies power to the RFID chip only in a case where there is a reader/writer access, which increases distances of reading and writing the tag and improves reliability of communication.

The most basic RFID system consists of two parts: an electronic tag (TAG) and a reader/writer. The electronic tag is composed of a coupling component and a chip. Each electronic tag has a unique electronic code and is placed on a target to be measured to achieve a purpose of marking the target object. The reader/writer can not only read information on the electronic tag, but also write the information on the electronic tag, and provide the electronic tag with power required for communication. After entering the electromagnetic field, the electronic tag receives a radio frequency signal transmitted by the reader/writer. The passive electronic tag or the inactive electronic tag uses power obtained from the electromagnetic field generated in space to transmit the information stored in the electronic tag. The reader/writer reads the information and decodes the information to identify the electronic tag.

Communication based on zero-power consumption terminals is referred to as zero-power consumption communication.

As shown in FIG. 2, a typical zero-power consumption communication system (e.g., an RFID system) includes a network device (e.g., a reader/writer of the RFID system) and a zero-power consumption terminal (e.g., an electronic tag). The network device is used to transmit a wireless power supply signal, a downlink communication signal to the zero-power consumption terminal, and receive a backscatter signal from the zero-power consumption terminal. Optionally, the zero-power consumption terminal includes a power harvesting module, a backscatter communication module and a low-power consumption computing module. In addition, the zero-power consumption terminal may further include a memory or a sensor for storing some basic information (such as object identification) or sensor data such as ambient temperature and ambient humidity.

For example, the power harvesting module may harvest power carried in radio waves in space (radio waves emitted by network device as shown in FIG. 2) to drive the low-power consumption computing module of the zero-power consumption terminal and realize backscatter communication. After obtaining power, the zero-power consumption terminal may receive a control command from the network device and transmit data to the network device based on the control signaling in the backscatter manner. The transmitted data may be data stored in the zero-power consumption terminal itself (such as identification or pre-written information, such as a production date, brand and manufacturer of a product). The zero-power consumption terminal may also be loaded with various types of sensors, so that data harvested by various types of sensors may be reported based on a zero-power consumption mechanism.

Key technologies in the zero-power consumption communication are described below.

### 1. RF Power Harvesting

As shown in FIG. 3, an RF power harvesting module realizes harvesting of electromagnetic wave power in space based on a principle of electromagnetic induction, and then obtains power required to drive the zero-power consumption terminal to work, such as driving low-power consumption demodulation and modulation modules, sensors, and memory reading. Therefore, the zero-power consumption terminal does not require a traditional battery.

### 2. Backscatter (back scattering)communication

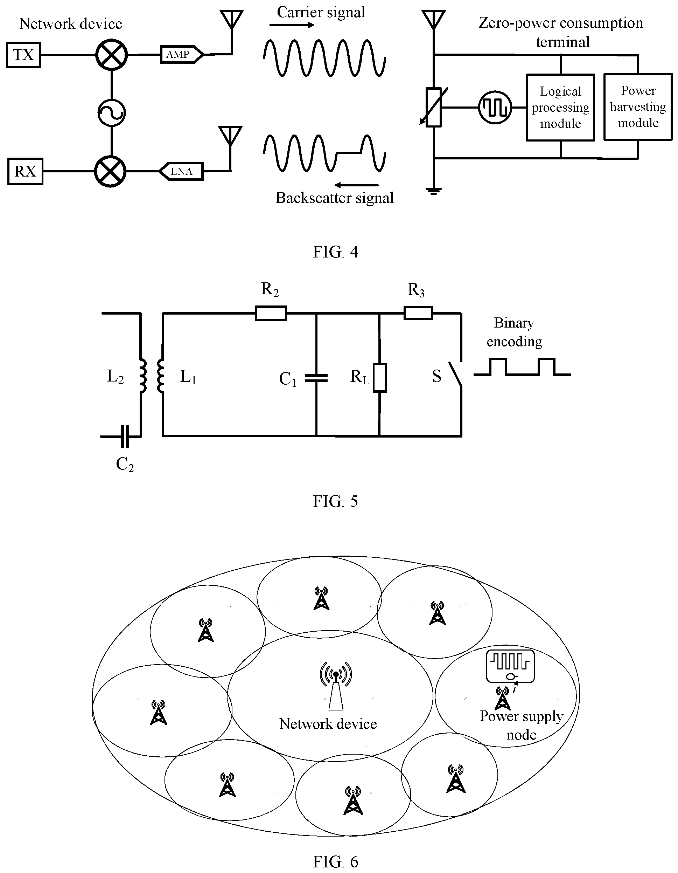

As shown in FIG. 4, the zero-power consumption terminal receives a carrier signal transmitted by the network device, modulates the carrier signal, loads information to be transmitted and radiates the modulated signal from an antenna. This information transmission process is called backscatter communication. Backscatter and a load modulation function are inseparable. Circuit parameters of a oscillation loop of the zero-power consumption terminal are adjusted and controlled according to a beat of a data stream, so that parameters such as a size of impedance of the zero-power consumption terminal are changed accordingly. Load modulation accomplishes a process of modulation through this mnner. Load modulation technology mainly includes two manners: resistive load modulation and capacitive load modulation. In resistive load modulation, a resistor is connected in parallel with the load, the resistor is turned on or off based on a control of a binary data stream, as shown in FIG. 5. The turning on and off of the resistor will enable a circuit voltage to change, thereby realizing amplitude shift keying (ASK) modulation. That is, the modulation and transmission of the signal is realized by adjusting amplitude of the backscatter signal of the zero-power consumption terminal. Similarly, in the capacitive load modulation, a resonant frequency of the circuit may be changed by turning on and off the capacitor, thereby realizing frequency shift keying (FSK) modulation. That is, modulation and transmission of the signal are realized by adjusting an operating frequency of the backscatter signal of the zero-power consumption terminal.

It can be seen that the zero-power consumption terminal perform information modulation of an incoming wave signal by means of the load modulation manner, thereby realizing the backscatter communication process. Therefore, the zero-power consumption terminal has significant advantages.
(1) It does not actively transmit a signal, so it does not require complex RF links, such as PA, RF filters.
(2) There is no need to actively generate a high-frequency signal, so no high-frequency crystal oscillator is not required.
(3) with the help of backscatter communication, terminal signal transmission does not need to consume the terminal's own energy.

### 3. Encoding technology

The data transmitted by the zero-power consumption terminal may use different forms of codes to indicate binary "1" and "0". Radio frequency identification systems usually use one of the following encoding manners: reverse non-return to zero (NRZ) encoding, manchester encoding, unipolar return to zero encoding, differential binary phase (DBP) encoding, differential encoding, pulse interval encoding (PIE), bi-phase space encoding (FMO), miller encoding, or other differential encodings. In simple terms, different encoding technologies use different pulse signals to indicate 0 and 1.

In some scenarios, based on power sources and usage manners of zero-power consumption terminals, the zero-power consumption terminals may be divided into the following types.

### 1. Passive zero-power consumption terminal

The zero-power consumption terminal (such as the electronic tag in the RFID system) does not require the built-in battery. In a case where the zero-power consumption terminal approaches a network device (such as the reader/writer in the RFID system), the zero-power consumption terminal is located within near field formed by radiation of an antenna of the network device. Therefore, the antenna of the zero-power consumption terminal generates an induced current through electromagnetic induction, and the induced current drives a low-power chip circuit of the zero-power consumption terminal. Demodulation of a forward link signal, modulation of a reverse link (or reflection link) signal and other operations are realized. For the backscatter link, the zero-power consumption terminal transmit a signal in the backscatter manner.

It can be seen that the passive zero-power consumption terminal does not require a built-in battery to drive both the forward link and the reverse link, and is a true zero-power consumption terminal.

The passive zero-power consumption terminal does not require the battery. The RF circuit and baseband circuit are very simple. For example, they do not require low-noise amplifiers (LNA), power amplifiers (PA), crystal oscillators, analog-to-digital converters (ADC) and other devices. Therefore, the passive zero-power consumption terminal has many advantages such as small size, light weight, very low price, and long service life.

### 2. Semi-passive zero-power consumption terminal

The semi-passive zero-power consumption terminal itself does not have a conventional battery, but may use an RF power harvesting module to harvest radio wave power and store the harvested power in a power storage unit (such as a capacitor). After obtaining power, the power storage unit may drive a low-power consumption chip circuit of the zero-power consumption terminal. Demodulation of the forward link signal, modulation of the reverse link signal and other operations are realized. For the backscatter link, the zero-power consumption terminal transmits a signal in the backscatter manner.

It can be seen that the semi-passive zero-power consumption terminal does not require a built-in battery to drive both the forward link and the reverse link. Although the power stored in the capacitor is used in operation, the power comes from the radio power harvested by the power harvesting module. Therefore, it is also a true zero-power consumption terminal.

The semi-passive zero-power consumption terminal inherits many advantages of the passive zero-power consumption terminal, so it has many advantages such as small size, light weight, very cheap price and long service life.

### 3. Active zero-power consumption terminal

A zero-power consumption terminal used in some scenarios may also be an active zero-power consumption terminal, and such a device may have a built-in battery. The battery is used to drive a low-power consumption chip circuit of the zero-power consumption terminal. Demodulation of the forward link signal, modulation of the reverse link signal and other operations are realized. However, for the backscatter link, the zero-power consumption terminal to transmit a signal in the backscatter manner. Therefore, the zero-power consumption of this type of device is mainly reflected in the fact that signal transmission of the reverse link does not require the terminal's own power, but uses the backscatter manner.

### Cellular passive internet of things

With increase in 5G industry applications, types of connected objects and application scenarios are increasing, and there will be higher requirements on cost and power consumption of communication terminals. Application of battery-free, low-cost passive internet of things devices will become a key technology for cellular internet of things. The types and number of 5G network-linked terminals are enriched, so as to truly realize Internet of Everything. Passive internet of things devices may be based on zero-power consumption communication technologies such as RFID technology, and may be extended on this basis to be suitable for cellular internet of things.

To facilitate understanding of the embodiments of the present application, a power supply signal, a scheduling signal and a carrier signal related to zero-power consumption communication are explained.

### 1. Power supply signal

The power supply signal is a power source for power harvesting by the zero-power consumption terminal.

In terms of frequency band, a frequency band of a radio wave used for power supply may be a low frequency, an intermediate frequency, a high frequency, etc.

In terms of waveform, the radio wave used for power supply may be a sine wave, a square wave, a triangle wave, a pulse, a rectangular wave, etc.

In addition, the power supply signal may be a continuous wave or a discontinuous wave (that is, a certain period of interruption is allowed).

Optionally, the power supply signal may be an existing signal in the 3GPP standard, for example a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH). Alternatively, it may be a WIFI signal or a bluetooth signal.

Optionally, the power supply signal may also be implemented by a newly defined signal, such as a newly defined signal dedicated to power supply.

### 2. Trigger signal, also known as scheduling signal

The trigger signal is used to trigger or schedule the zero-power consumption terminal to transmit data.

In terms of frequency band, a radio wave used for triggering or scheduling may be low frequency, medium frequency, high frequency, etc.

In terms of waveform, a radio wave used for triggering or scheduling may be a sine wave, a square wave, a triangle wave, a pulse, a rectangular wave, etc.

In addition, the trigger signal may be a continuous wave or a discontinuous wave (i.e., a certain period of interruption is allowed).

Optionally, the trigger signal may be an existing signal in the 3GPP standard, for example an SRS, a PUSCH, a PRACH, a PUCCH, a PDCCH, a PDSCH, a PBCH; or aWIFI signal or a bluetooth signal.

Optionally, the trigger signal may also be implemented by a newly defined signal, such as a newly defined signal dedicated to triggering or scheduling.

### 3. Carrier signal

The carrier signal is used by the zero-power consumption terminal to generate a backscatter signal. For example, the zero-power consumption terminal may modulate the received carrier signal according to information to be transmit to form the backscatter signal.

In terms of frequency band, a radio wave used as the carrier signal may be a low frequency, an intermediate frequency, a high frequency, etc.

In terms of waveform, the radio wave used as the carrier signal may be a sine wave, a square wave, a triangle wave, a pulse, a rectangular wave, etc.

In addition, the carrier signal may be a continuous wave or a discontinuous wave (that is, a certain period of interruption is allowed).

Optionally, the carrier signal may be an existing signal in the 3GPP standard, for example an SRS, a PUSCH, a PRACH, a PUCCH, a PDCCH, a PDSCH, a PBCH; or a WIFI signal, a bluetooth signal, a zigbee signal.

Optionally, the carrier signal may also be implemented by a newly defined signal, such as a newly defined carrier signal dedicated to generating a backscatter signal.

It should be noted that in the embodiments of the present application, the power supply signal, the scheduling signal and the carrier signal may be the same signal, or may also be different signals. For example, the power supply signal may be used as a carrier signal, and the scheduling signal may also be used as a carrier signal.

In actual network deployment, a technical bottleneck faced by passive zero-power consumption communication technology is a limited coverage distance of the forward link. The main reason is that the communication distance of the forward link is limited by signal strength of the wireless signal reaching the zero-power consumption terminal. Based on the existing implementation process, the zero-power consumption terminal generally needs to consume 10 microwatts (uw) of power to drive the low-power consumption circuit. This means that the power of the signal reaching the zero-power consumption terminal needs to be at least -20 dBm. Due to radio regulatory requirements, the transmission power of network device generally cannot be too large. For example, in the ISM frequency band where RFID works, the maximum transmission power is 30dBm. Therefore, considering radio propagation loss in space, the transmission distance of the passive zero-power consumption terminal is generally in a range of 10 m to several tens of meters.

The semi-passive zero-power consumption terminal has potential to significantly expand communication distances. This is because the semi-passive zero-power consumption terminal may use the power harvesting module to harvest radio waves. In this way, the semi-passive zero-power consumption terminal may continuously obtain radio power and store it in the power storage unit. After obtaining sufficient power, the power storage unit may drive the low-power consumption circuit to operate for demodulation of the forward link signal and modulation of the reverse link signal and other operations. Therefore, in this case, the semi-passive zero-power consumption terminal is equivalent to an active terminal, and its downlink coverage depends on receiver sensitivity of the downlink signal (usually far less than an RF power harvesting threshold). Based on the current process, the power harvesting module may perform power harvesting and input electrical energy into the power storage unit in a case where strength of the received radio signal is not less than -30 dBm. Therefore, the coverage of the forward link of the semi-passive zero-power consumption terminal depends on the power harvesting threshold (such as -30 dBm). Compared with the passive zero-power consumption terminal, the strength of the received radio signal is relaxed from -20 dBm to -30 dBm. Therefore, a link budget gain of 10 dB can be obtained, which may improve the downlink coverage by more than 3 times.

However, the semi-passive zero-power consumption terminal also faces a problem of reduced charging efficiency while the coverage of the forward link is improved. As the strength of the received signal decreases, the power that may be collected and stored by the power harvesting module is greatly reduced. For example, in a case where the strength of the received signal is -30 dBm, i.e., 1 microwatt, the power that may be harvested and stored is far less than 1 microwatt (the power harvesting efficiency is greatly reduced). In addition, as described above, the low-power consumption circuit of the zero-power consumption terminal may need to consume an average power of 10 uw.

Since the network device has a high receiver sensitivity, which may reach -95 dBm, the coverage of the reverse link is much larger than that of the forward link. For the passive zero-power consumption terminal and the semi-passive zero-power consumption terminal, if power required for their operations comes from power harvested from wireless signals, coverage of their forward links will be limited by power levels of the wireless signals reaching the zero-power consumption terminals rather than receiver sensitivity of the zero-power consumption terminals, which will result in low effective coverage of the forward links. At the same time, it also results in an imbalance between the coverage of the forward link and the coverage of the reverse link.

In some scenarios, for the zero-power consumption terminal that relies on the power supplied by the wireless signal, in order to improve the coverage of the forward link, dedicated power supply nodes are deployeed in an implementation, so that the forward link is no longer limited by a distance over which the wireless signal supplies the power. As shown in FIG. 6, a plurality of power supply nodes are deployed within coverage of the network device. The zero-power consumption terminal may be powered by wireless signals transmitted by nearby power supply nodes, thereby receiving information carried in the forward link and improving the coverage of the forward link.

However, deployment cost of the power supply nodes is high, wiring, power supply, installation and subsequent maintenance are required. Moreover, this power supply manner is not power-saving and has low power supply efficiency. Therefore, how to supply power to the zero-power consumption terminals to reduce power supply overhead is an urgent problem to be solved.

To facilitate the understanding of the technical solutions in the embodiments of the present application, the technical solutions of the present application will be described in detail below through specific embodiments. The above related technologies, as optional solutions, may be arbitrarily combined with the technical solutions in the embodiments of the present application, which all fall within the protection scope of the embodiments of the present application. The embodiments of the present application include at least a part of the following contents.

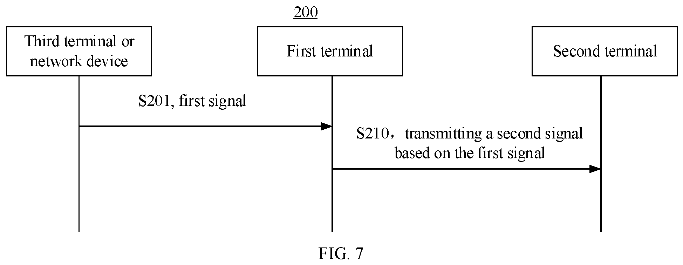

FIG. 7 is a schematic diagram of a wireless communication method 200 according to the embodiments of the present application. As shown in FIG. 7, the method 200 includes at least a part of the following contents.

In S201, a first terminal receives a first signal transmitted by a network device or a third terminal.

In S210, the first terminal transmits a second signal to a second terminal based on the first signal. The second signal is used to supply power to the second terminal.

In some embodiments, the first terminal and the third terminal are each also referred to as a power supply terminal, i.e., a terminal that transmits a power supply signal.

In some embodiments, the second terminal is also referred to as a power harvesting terminal, i.e., a terminal that receives the power supply signal.

In some embodiments, the first terminal may include a signal amplifier, and the signal amplifier is used to amplify a transmitted signal to achieve a greater transmission distance of the signal.

In some embodiments, the first terminal may include a power storage unit, and the power storage unit may utilize ambient power for power storage, or may utilize a radio signal for power storage, or the like. Therefore, the first terminal may utilize the storage capacity to drive a low-power consumption computing circuit and the signal amplifier to transmit the signal. Optionally, the signal amplifier may be a PA, an LNA, a triode, a tunnel diode, etc. The LNA has a very low noise coefficient and is suitable for amplifying a weak signal.

In some embodiments, the first terminal may include a backscatter communication module, and the backscatter communication module is used to transmit a signal in a backscatter manner.

Optionally, the first terminal further includes an active transmission communication module, and the active transmission communication module is used to transmit data in an active transmission manner.

In some embodiments, the second terminal may perform power harvesting through a wireless signal. For example, the second terminal may be a passive zero-power consumption terminal or a semi-passive zero-power consumption terminal. Optionally, the second terminal may include a backscatter communication module, and the backscatter communication module is used to transmit a signal in a backscatter manner.

In some embodiments, the first terminal, the second terminal and the third terminal are zero-power consumption terminals.

In some embodiments, the first terminal may be an ambient power-based device, such as an ambient power enabled IoT (AMP IoT) device, or a communication device in a cellular network, or a communication device in a non-cellular network. The non-cellular network may include, for example and without limitation, a WIFI system, a bluetooth system, a Zigbee system, a Lora system.

In some embodiments, the second terminal may be an ambient power-based device, such as an AMP IoT device, or a communication device in a cellular network (such as a device with power supply demand in the cellular network), or a communication device in a non-cellular network (such as a device with power supply demand in the non-cellular network). The non-cellular network may include, for example and without limitation, a WIFI system, a bluetooth system, a Zigbee system, a Lora system.

In some embodiments, the third terminal may be an ambient power-based device, such as an AMP IoT device, or a communication device in a cellular network, or a communication device in a non-cellular network. The non-cellular network may include, for example and without limitation, a WIFI system, a bluetooth system, a Zigbee system, a Lora system.

In some embodiments, the first terminal and the third terminal may be terminals of a type, denoted as first-type terminals. The second terminal may be terminals of another type, denoted as a second-type terminal.

In some embodiments, the first-type terminal has higher capabilitiy than the second-type terminal. For example, the first-type terminal is an active zero-power consumption terminal or a semi-passive zero-power consumption terminal. The second-type terminal is a semi-passive zero-power consumption terminal or a passive zero-power consumption terminal.

For example, the first-type terminal has more power sources than the second-type terminal, or the first-type terminal has a higher power harvesting capability than the second-type terminal. As an example, the first-type terminal may perform power harvesting based on the ambient power and the radio signal, and the second-type terminal may perform power harvesting based on the radio signal.

For another example, the first-type terminal includes a signal amplifier, and the second-type terminal does not include a signal amplifier.

For another example, the first-type terminal includes a backscatter communication module and an active transmission communication module, and the second-type terminal includes a backscatter communication module. The backscatter communication module is used to transmit a signal in the backscatter manner, and the active transmission communication module is used to transmit data in the active transmission manner.

In some embodiments, the first terminal and the second terminal may be independent devices, or may be different functional modules of one third-type terminal. For example, the first terminal includes an amplifier module of the third-type terminal, and the second terminal includes a communication module of the third-type terminal such as a backscatter communication module. Optionally, the first terminal further includes a power storage module of the third-type terminal.

In some embodiments, the first terminal, the second terminal and the third terminal may be independent devices, or may be different functional modules of a fourth-type terminal. For example, the first terminal and the third terminal may include an amplifier module of the fourth-type terminal, and the second terminal may include a communication module of the fourth-type terminal such as a backscatter communication module. Optionally, the first terminal and the third terminal further include a power storage module of the fourth-type terminal.

In some embodiments, the first terminal is used to expand coverage of the power supply signal, for example, expand coverage of the first signal to coverage of the first signal and the second signal. For example, the first terminal may have a strong power harvesting capability and size requirements may be relaxed. For example, the first terminal may include a light power harvesting module with a large area, a dual-frequency antenna, an antenna array with more antenna units, or the like. For example, the dual-frequency antenna may perform power harvesting in two frequency bands, and may perform power harvesting in frequency bands with rich wireless signals, such as GSM, 3G frequency bands, WiFi and bluetooth frequency bands, digital TV broadcasting frequency bands. The antenna array may generate high antenna gain and increase power of a received wireless signal. Solar-based power harvesting may have high power conversion efficiency. Optionally, the first terminal may also be a battery-powered device or a power source-powered device.

In some embodiments, the network device may transmit information to the second terminal via a forward link during a period in which the first terminal transmits the second signal.

It should be understood that the embodiments of the present application do not limit the power harvesting manner of the first terminal. For example, the power harvesting may be performed based on the first signal, or it may not rely on the wireless signal. For example, the power harvesting may be performed through ambient power such as light energy, heat energy.

In some embodiments, the second signal is an amplified signal. The first terminal supplies power to the second terminal by transmitting the amplified signal, which is beneficial to increasing a transmission distance of the transmitted second signal and a power level of the second signal reaching the second terminal, thereby improving coverage of the forward link.

In some embodiments, the second signal is transmitted after the first signal is amplified.

For example, the first terminal may amplify the received first signal through an LNA, and transmit the second signal using the amplified first signal.

Optionally, a amplification coefficient of the LNA of the first terminal may be fixed, or may be flexibly adjusted to meet coverage requirements of different types.

In some embodiments, the second signal is transmitted in the backscatter manner.

For example, the second signal is an amplidfied signal of the first signnal and is transmitted by the first terminal through backscatter processing.

That is to say, the second signal is a backscatter signal obtained by amplifying the first signal that is used as an incident signal.

In a specific embodiment, the second signal is transmitted by the first terminal in the backscatter manner after amplifying the first signal through the LNA.

In some embodiments, the second signal is transmitted in the active transmission manner.

In this case, the first signal may be a power supply signal of the second signal and/or a control signal (or a scheduling signal) of the second signal. That is, the first signal may be used to supply power to the transmission of the second signal, or may also be used to control (or schedule) the transmission of the second signal. Optionally, the first terminal may also perform power harvesting on the control signal of the second signal to store power for transmitting the second signal.

In some embodiments, S210 may include:
that the first terminal performs power harvesting based on the first signal, and transmits the second signal actively based on the harvested power.

For example, the first terminal may perform power harvesting based on the first signal, and transmit the second signal actively after storing enough power.

In some embodiments, S210 may include:
that the first terminal transmits the second signal actively based on control of the first signal.

For example, the first terminal may actively transmit the second signal after receiving the first signal. In this case, the power source of the first terminal may be the first signal, or may also be the ambient power, such as solar power, thermal power, mechanical power.

In some embodiments of the present application, the first signal is transmitted by the network device. In a case where the network device directly supplies power to the second terminal through the first signal, the coverage distance of the power supply signal is limited by the strength of the first signal. In the embodiments of the present application, the first-type terminal is deployed, the first-type terminal transmit the second signal based on the first signal, and the network device may supply power to the second-type terminal through the second signal, thereby expanding the coverage of the power supply signal. In this way, the network device may supply power to the second-type terminal at a long distance through one or more first-type terminals, so that the power level of the power supply signal reaching the second-type terminal meets working requirements of the second-type terminal.

In some embodiments, the first-type terminal may be deployed according to factors such as the strength of the power supply signal, attenuation of the power supply signal, minimum power required for operation of the second terminal (for example, power required to drive a low-power consumption circuit).

For example, 10 milliwatts are consumed to drive the low-power consumption circuit of the second-type terminal to operate, this means that the signal power reaching the second-type terminal needs to be at least -20 dBm. The first-type terminal may be deployed on the path where the received power of the first signal is not attenuated to -20dB, so that the first-type terminal may transmit an amplified second signal based on the first signal, thereby further expanding the coverage distance of the power supply signal.

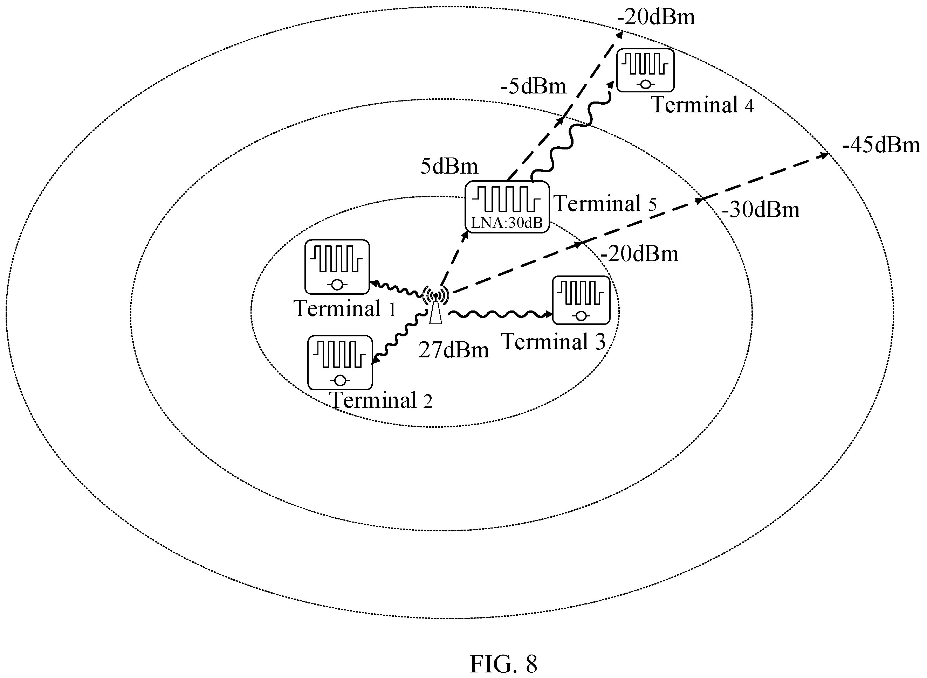

A description is given by taking FIG. 8 as an example. In the example of FIG. 8, the first-type terminal transmits the second signal in the backscatter manner. It is assumed that 10 milliwatts are consumed to the drive the low-power consumption circuit of the second-type terminal to operate, the maximum transmission power of the network device is 27 dBm, and the first signal transmitted by the network device is attenuated with increase of the transmission distance. In a case where the power level of the first signal is attenuated to -20 dBm, it is amplified and backscattered by the first-type terminal. The amplification capacity of the LNA of the first-type terminal is 30 dB, and the backscatter signal will have a loss of 5 dB compared to the incident signal. Therefore, the second signal transmitted by the first-type terminal in the backscatter manner may have a gain of 25 dB compared to the power of the first signal. That is, in a case where the first signal reaches -20 dB, it is backscattered by the first-type terminal to form a second signal with power of 5 dBm. The coverage expanded by the second signal may be a distance where it is attenuated to -20 dBm. In this case, the first signal will be attenuated to -45 dBm. Assuming that -45 dBm is a receiver sensitivity of the second-type terminal, the communication coverage of the forward link can be met. The second-type terminal may demodulate the forward link signal transmitted by the network device through the power supplied by the second signal. Optionally, as shown in FIG. 8, the first-type terminal may be deployed at a position where the received power of the first signal is greater than -20dBm, and the first signal transmitted by the network device may directly supply power to a second-type terminal that is closer to the network device (such as terminal 1, terminal 2, terminal 3). If the first signal is used to supply power to a second-type terminal at a long distance (such as terminal 4), the power of the first signal reaching terminal 4 is -45 dBm and cannot drive terminal 4 to operate. However, a power supply signal amplified by the first-type terminal is used to supply power to terminal 4, and power of the power supply signal reaching the terminal 4 is -20 dBm and may drive the terminal 4 to operate.

In some embodiments of the present application, the coverage of the power supply signal may also be expanded through a multi-stage amplification manner (or a relay manner). That is to say, the network device may supply power to the second-type terminal through one first-type terminal, or a plurality of first-type terminals.

For example, the network device is a first-level power supply device, and the first terminal may be a next-level power supply device of the network device, i.e., the second-level power supply device. The first terminal may amplify the power supply signal transmitted by the network device and transmit a next-level power supply signal. The power supply signal transmitted by the first terminal may directly supply power to the second terminal. Alternatively, more levels of power supply devices may be deployed to supply power to a second terminal at a farther distance.

In some embodiments of the present application, the first signal may be transmitted by the third terminal.

For example, the third terminal is a first-level power supply device of the multi-level power supply devices, and the first terminal is a next-level power supply device of the third terminal. The first terminal may amplify the power supply signal transmitted by the third terminal and transmit a next-level power supply signal.

In some embodiments, multi-level first-type terminals may be deployed within the coverage of the forward link of the network device to expand the coverage of the power supply signal, thereby ensuring that the coverage of the power supply signal matches the coverage of the forward link.

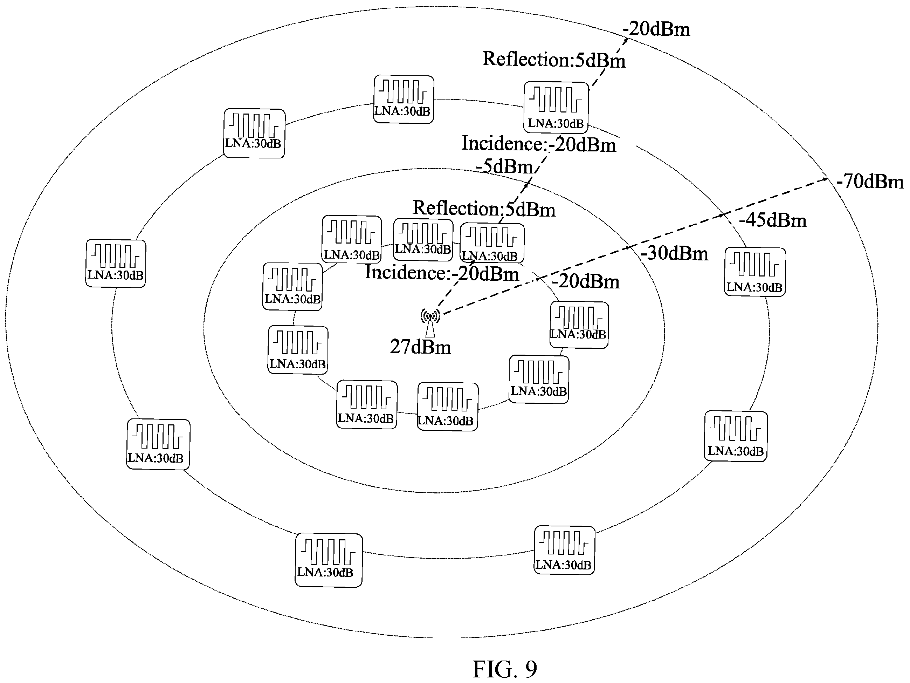

For example, one level of first-type terminal may generate a gain of 25 dB. In an ideal condition, two levels of first-type terminals may generate a gain of 50 dB through the relay manner. As shown in FIG. 9, an incident first power supply signal of a first-level first-type terminal has a power of -20 dBm, and after it is amplified by the first-level first-type terminal, a second power supply signal with a power of 5 dBm is generated. An incident second power supply signal of a second-level first-type terminal has a power of -20 dBm, and after it is amplified by the second-level first-type terminal, a third power supply signal with a power of 5 dBm is generated. The third power supply signal may cover as far as a position where the third power supply signal is attenuated to -20 dBm, and the first power supply signal is attenuated to -70 dBm at this position. Therefore, through the amplification of the two levels of first-type terminals, the coverage of the forward link can be further expanded, and the coverage of the receiver sensitivity of -70dBm can be met.

In some embodiments, a frequency of the second signal is the same as a frequency of the first signal.

In some other embodiments, the frequency of the second signal and the frequency of the first signal have a first frequency offset.

For example, in addition to amplifying the incident first signal, the first terminal may perform a certain frequency offset on the incident first signal, so as to be able to generate power supply signals with different frequencies according to demands.

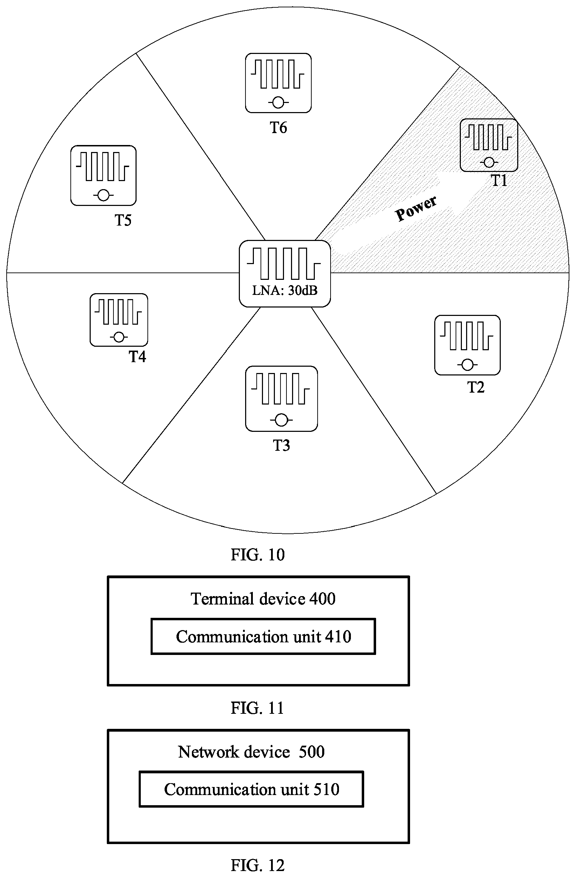

In some embodiments, the transmission of the second signal has certain spatial characteristics or spatial relationships. For example, the second signal is transmitted based on first spatial information. Optionally, the first spatial information may include but is not limited to direction information, beam information, and a spatial domain transmission filter. Optionally, the first terminal transmits the second signal based on certain spatial characteristics, so that the power of the second signal is concentrated in a certain spatial direction, which enhances coverage of the second signal in the spatial direction. As shown in FIG. 10, the power supply signal transmitted by the first terminal may be concentrated in a certain spatial direction to cover a second terminal in the specific spatial direction.

In some embodiments, a transmission antenna of the first terminal may be designed to have a strong gain in a certain spatial direction, so that the transmission power of the second signal transmitted by the first terminal may be concentrated in the certain spatial direction. Optionally, the transmission antenna of the first terminal may be implemented by an antenna array.

In some embodiments, a spatial attribute of the second signal may be set according to demands. For example, in a case where it is necessary to supply power to a second terminal within a first spatial range, the second signal is transmitted based on first spatial information. In a case where it is necessary to supply power to a second terminal within a second spatial range, the second signal is transmitted based on second spatial information.

In some embodiments, the first signal is transmitted periodically.

In some embodiments, the second signal is transmitted periodically.

Optionally, a transmission period of the second signal may be configured by the network device or may be predefined.

Optionally, the second signal may be transmitted according to a certain pattern. Optionally, the pattern may be configured by the network device or may be predefined.

In some embodiments, the second signal may be a basic power supply signal, or an actively transmitted power supply signal. The power supply signal is used to ensure a basic power supply demand of the second terminal.

In some embodiments, the second signal is transmitted based on triggering (or controling, scheduling).

In some embodiments of the present application, the method 200 further includes:
that the first terminal receives first information transmitted by the network device. The first information is used to control the first terminal to transmit the second signal.

Optionally, in a case where the first signal is used to control the first terminal to transmit the second signal, the first information may be carried in the first signal.

Optionally, the first information is control information of the second signal. The first information is used to indicate transmission parameters of the power supply signal, or transmission parameters of the power supply signal expected by the network device. For example, the first signal includes but is not limited to at least one of: spatial information of the power supply signal, transmission duration information of the power supply signal, or transmission power information of the power supply signal.

That is, the network device may control the transmission parameters of the power supply signal transmitted by the first terminal, such as the spatial information, transmission the duration information, and the transmission power information that are used for transmitting the power supply signal.

Optionally, in a case where the network device needs to communicate with the second terminal, the network device may control the first terminal to transmit the second signal.

For example, in a case where the network device needs to communicate with the second terminal, the network device may transmit the first information to the first terminal.

In some embodiments, the first terminal needs to perform power harvesting to transmit the power supply signal. For example, the first terminal may transmit the power supply signal for a certain period of time based on power harvesting over a period of time. Therefore, the power supply duration of the first terminal is limited by power harvesting efficiency and a power storage state of the first terminal.

In some embodiments of the present application, the method 200 further includes:
that the first terminal transmits second information to the network device. The second information is used to indicate capability information of the first terminal used for transmitting the second signal, or transmission parameters of the second signal supported by the first terminal.

As an example, the second information includes but is not limited to at least one of:
spatial information of a power supply signal supported to be transmitted by the first terminal;
transmission duration information of the power supply signal supported by the first terminal, i.e., how long the first terminal supports the transmission of the power supply signal; or
transmission power information of the power supply signal supported by the first terminal i.e., how much power the first terminal supports the transmssion of the power supply signal.

Optionally, the second information may be determined according to information of the first terminal, such as a current power storage state, power harvesting efficiency, and power consumption of transmitting the power supply signal.

Optionally, the second information may be transmitted after the first information.

For example, after receiving the first information transmitted by the network device, the first terminal determines that the power harvesting capability or power storage state of the first terminal may meet the transmission parameters of the power supply signal required by the first information. The first terminal may transmit second information to the network device to indicate the transmission parameters of the power supply signal supported by the second terminal.

Optionally, the first information may be transmitted after the second information.

For example, after receiving the second information, the network device may determine the first information according to the second information to control the first terminal to transmit the power supply signal using appropriate transmission parameters.

In some embodiments of the present application, the method 200 further includes:
that the second terminal transmits first request information to the first terminal or the network device. The first request information is used to request the first terminal or the network device to transmit a power supply signal.

In some embodiments, the second terminal may perform power harvesting on the second signal to transmit the first request information.

That is, the second signal may be used to ensure the transmission of the first request information by the second terminal.

Optionally, after receiving the first request information, the network device or the first terminal may provide an additional power supply signal to the second terminal according to the first request information, thereby ensuring subsequent data transmission of the second terminal.

In some embodiments, the first request information is transmitted by the second terminal in a specific condition (e.g., there is an instantaneous power supply demand). For example, in a case where there is data to be transmitted, the second signal is insufficient to meet the power supply demand of the second terminal, and the second terminal may request an additional power supply signal through the first request information.

In some embodiments, the first request information includes at least one of:
a length of time of the power supply signal requested to be transmitted, a transmission period of the power supply signal requested to be transmitted, a strength of the power supply signal requested to be transmitted, spatial information of the power supply signal requested to be transmitted, a power harvesting capability of the second terminal, a type of a service to be transmitted by the second terminal, duration of the service to be transmitted by the second terminal, a data volume of the service to be transmitted by the second terminal, or first indication information. The first indication information is used to indicate that the second terminal requests the first terminal to transmit the power supply signal or that there is data to be transmitted at the second terminal.

Optionally, the first indication information may be 1 bit.

Optionally, the first request information may be transmitted in a backscatter manner.

Optionally, the second terminal may use the power supply signal as a carrier signal for backscatter, or may use a dedicated carrier signal for backscatter to transmit the first request information.

In some embodiments of the present application, the method 200 further includes:
that the first terminal transmits a fourth signal based on a third signal. The fourth signal is used to supply power to the second terminal, and the fourth signal is transmitted based on the first request information. The third signal may be transmitted by a network device or a third terminal.

For example, in a case of receiving the first request information, the network device may control the first terminal to supply power to the second terminal. For example, the network device transmits the third signal to the first terminal, and further, the first terminal transmits the fourth signal based on the third signal.

For another example, in a case of receiving the first request information, the first terminal may transmit the fourth signal based on the third signal from the network device or the third device.

In some embodiments, the fourth signal may be considered as an additional power supply signal, or a passively transmitted power supply signal (e.g., a request-based power supply signal), or a power supply signal transmitted on demand. The fourth signal may be used to ensure the instantaneous power supply demand of the second terminal, or an urgent power supply demand, etc.

In some embodiments, the fourth signal may be transmitted based on certain spatial information.

In some embodiments, a transmission period of the second signal is greater than a transmission period of the fourth signal. That is, the transmission of the additional power supply signal is more frequent than the transmission of the basic power supply signal, which is beneficial to ensure that the second terminal obtains sufficient power for data transmission.

In some embodiments, duration of the second signal is less than duration of the fourth signal. That is, the transmission time of the additional power supply signal is longer than the transmission time of the basic power supply signal, which is beneficial to ensure that the second terminal obtains sufficient power for data transmission.

In some embodiments, transmission power of the fourth signal is greater than transmission power of the second signal. That is, strength of the additional power supply signal is greater than strength of the basic power supply signal, which is beneficial to improve the power harvesting efficiency of the second terminal and ensure that the second terminal obtains sufficient power for data transmission.

In some embodiments, the third signal is transmitted periodically.

In some embodiments, the fourth signal is transmitted periodically.

In summary, in the embodiments of the present application, the first terminal may transmit the second signal based on the first signal transmitted by the network device or the third terminal to supply power to the second terminal. In this way, the network device and one or more terminals (for example, the first terminal, or the first terminal and the third terminal) supply power to the second terminal in a relay manner, which can expand the coverage of the power supply signal and improve the power level of the power supply signal reaching the second terminal, so that the coverage of the power supply signal matches the coverage of the forward link.

Furthermore, the first terminal may provide an additional power supply signal to the second terminal based on the request of the second terminal, which is helpful to meet the instantaneous power demand of the second terminal.

The method embodiments of the present application have been described in detail above with reference to FIGS. 7 to 10. The apparatus embodiments of the present application will be described in detail below with reference to FIGS. 11 to 16. It should be understood that the apparatus embodiments and the method embodiments correspond to each other, and similar descriptions can refer to the method embodiments.

FIG. 11 illustrates a schematic block diagram of a terminal device 400 according to the embodiments of the present application. As shown in FIG. 11, the terminal device 400 includes:
a communication unit 410, configured to transmit a second signal to a second terminal based on a first signal. The second signal is used to supply power to the second terminal, and the first signal is transmitted by a network device or a third terminal.

In some embodiments, the second signal is an amplified signal.

In some embodiments, the second signal is an amplified signal of the first signal and is transmitted by the terminal devicethrough backscatter processing.

In some embodiments, the second signal is transmitted in an active transmission manner.

In some embodiments, the second signal is transmitted based on a power that is obtained by the first terminal through performing power harvesting on the first signal.

In some embodiments, the first signal is used to control the terminal device to transmit the second signal.

In some embodiments, a frequency of the second signal is the same as a frequency of the first signal.

In some embodiments, a frequency of the second signal and a frequency of the first signal have a first frequency offset.

In some embodiments, the second signal is transmitted based on first spatial information.

In some embodiments, the communication unit 410 is further configured to:
receive first information transmitted by the network device, where the first information is used to control the terminal device to transmit the second signal.

In some embodiments, the first information includes at least one of:
spatial information of a power supply signal, transmission duration information of the power supply signal, or transmission power information of the power supply signal.

In some embodiments, the communication unit 410 is further configured to: transmit second information to the network device, where the second information is used to indicate capability information of the terminal device used for transmitting the second signal.

In some embodiments, the second information includes at least one:
spatial information of a power supply signal supported to be transmitted by the terminal device;
transmission duration information of the power supply signal supported by the terminal device; or
transmission power information of the power supply signal supported by the terminal device.

In some embodiments, the first signal is transmitted periodically.

In some embodiments, the second signal is transmitted periodically.

In some embodiments, the communication unit 410 is further configured to:
receive first request information from the second terminal. The first request information is used to request the terminal device to transmit a power supply signal.

In some embodiments, the first request information includes at least one of:
a length of time of the power supply signal requested to be transmitted, a transmission period of the power supply signal requested to be transmitted, a strength of the power supply signal requested to be transmitted, spatial information of the power supply signal requested to be transmitted, a power harvesting capability of the second terminal, a type of a service to be transmitted by the second terminal, duration of the service to be transmitted by the second terminal, a data volume of the service to be transmitted by the second terminal, or first indication information, where the first indication information is used to indicate that the second terminal requests the terminal device to transmit the power supply signal or is used to indicate that there is data to be transmitted at the second terminal.

In some embodiments, the communication unit 410 is further used to transmit a fourth signal based on a third signal. The fourth signal is used to supply power to the second terminal, and the fourth signal is transmitted based on the first request information.

In some embodiments, a transmission period of the second signal is greater than a transmission period of the fourth signal; and/or
duration of the second signal is less than duration of the fourth signal.

Optionally, in some embodiments, the communication unit mentioned above may be a communication interface or a transceiver, or may be an input/output interface of a communication chip or a system on chip.

It should be understood that the terminal device 500 according to the embodiments of the present application may correspond to the first terminal in the method embodiments of the present application. The above-mentioned and other operations and/or functions of each unit in the terminal device 500 are respectively used for implementing the corresponding processes of the first terminal in the methods shown in FIGS. 7 to 10, which will not be repeated here for brevity.

FIG. 12 illustrates a schematic block diagram of a network device 500 according to the embodiments of the present application. As shown in FIG. 12, network device 500 includes:
a communication unit 510, configured to transmit a first signal to a first terminal. The first signal is used for the first terminal to transmit a second signal, and the second signal is used to supply power to a second terminal.

In some embodiments, the first signal is transmitted periodically.

In some embodiments, the communication unit 510 is further used to:
transmit first information to the first terminal. The first information is used to control the first terminal to transmit the second signal.

In some embodiments, the first information includes at least one of:
spatial information of a power supply signal, transmission duration information of the power supply signal, or transmission power information of the power supply signal.

In some embodiments, the communication unit 510 is further configured to:
receive second information transmitted by the first terminal, where the second information is used to indicate capability information of the first terminal used for transmitting the second signal.

In some embodiments, the second information includes at least one of:
spatial information of a power supply signal supported to be transmitted by the first terminal;
transmission duration information of the power supply signal supported by the first terminal; or
transmission power information of the power supply signal supported by the first terminal.

In some embodiments, the communication unit 510 is further configured to:
receive first request information transmitted by the second terminal. The first request information is used to request the network device to transmit a power supply signal.

In some embodiments, the communication unit 510 is further configured to:
transmit a third signal to the first terminal, where the third signal is used for the first terminal to transmit a fourth signal, and the fourth signal is used to supply power to the second terminal.

In some embodiments, the third signal is transmitted based on the first request information.

Optionally, in some embodiments, the communication unit mentioned above may be a communication interface or a transceiver, or may be an input/output interface of a communication chip or a system on chip. The processing unit mentioned above may be one or more processors.

It should be understood that the network device 500 according to the embodiments of the present application may correspond to the network device in the method embodiments of the present application. The above-mentioned and other operations and/or functions of each unit in the network device 500 are respectively used for implementing the corresponding processes of the network device in the methods shown in FIGS. 7 to 10, which will not be repeated here for brevity.

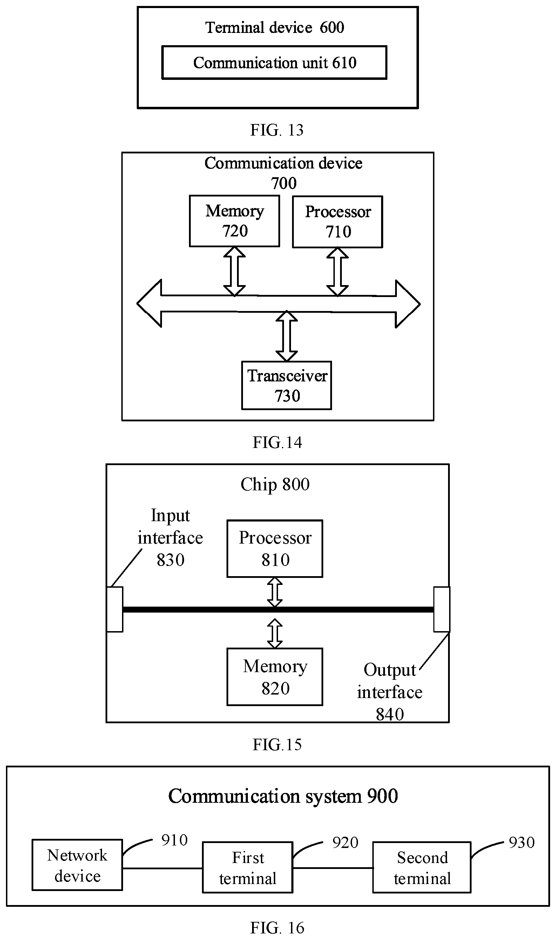

FIG. 13 illustrates a schematic block diagram of a terminal device 600 according to the embodiments of the present application. As shown in FIG. 13, the terminal device 600 includes:
a communication unit 610, configured to transmit first request information to a first terminal. The first request information is used to request the first terminal to transmit a power supply signal.

In some embodiments, the first request information includes at least one of:
a length of time of the power supply signal requested to be transmitted, a transmission period of the power supply signal requested to be transmitted, a strength of the power supply signal requested to be transmitted, spatial information of the power supply signal requested to be transmitted, a power harvesting capability of the terminal device, a type of a service to be transmitted by the terminal device, duration of the service to be transmitted by the terminal device, a data volume of the service to be transmitted by the terminal device, or first indication information, where the first indication information is used to indicate that the terminal device requests the first terminal to transmit the power supply signal or that there is data to be transmitted at the terminal device.

In some embodiments, the communication unit 610 is further configured to:
receive a fourth signal transmitted by the first terminal. The fourth signal is used for the terminal device to perform power harvesting.

In some embodiments, the fourth signal is transmitted based on the first request information.

In some embodiments, the communication unit 610 is further configured to:
receive a second signal transmitted by the first terminal. The second signal is used for the terminal device to perform power harvesting.

In some embodiments, the first request information is transmitted based on a power that is obtained by the terminal through performing power harvesting on the second signal.

Optionally, in some embodiments, the communication unit mentioned above may be a communication interface or a transceiver, or may be an input/output interface of a communication chip or a system on chip.

It should be understood that the terminal device 600 according to the embodiments of the present application may correspond to the second terminal in the method embodiments of the present application. The above-mentioned and other operations and/or functions of each unit in the terminal device 600 are respectively used for implementing the corresponding processes of the second terminal in the methods shown in FIGS. 7 to 10, which will not be repeated here for brevity.

FIG. 14 is a schematic structural diagram of a communication device 700 provided in the embodiments of the present application. The communication device 700 shown in FIG. 14 includes a processor 710, and the processor 710 may invoke and run a computer program from a memory to implement the methods in the embodiments of the present application.

Optionally, as shown in FIG. 14, the communication device 700 further includes a memory 720 . The processor 710 may invoke and run a computer program from the memory 720 to implement the methods in the embodiments of the present application.

The memory 720 may be a separate device independent from the processor 710, or may be integrated into the processor 710 .

Optionally, as shown in FIG. 14, the communication device 700 may further include a transceiver 730. The processor 710 may control the transceiver 730 to communicate with other devices. Specifically, the transceiver 730 may transmit information or data to other devices, or receive information or data transmitted by other devices.

The transceiver 730 may include a transmitter and a receiver. The transceiver 730 may further include antenna(s), and the number of antennas may be one or more.

Optionally, the communication device 700 may specifically be the network device in the embodiments of the present application, and the communication device 700 may implement corresponding processes implemented by the network device in the various methods of the embodiments of the present application, which will not be repeated here for brevity.

Optionally, the communication device 700 may specifically be the mobile terminal/terminal device in the embodiments of the present application, and the communication device 700 may implement the corresponding processes implemented by the mobile terminal/terminal device in the various methods of the embodiments of the present application, which will not be repeated here for brevity.

FIG. 15 is a schematic structural diagram of a chip of the embodiments of the present application. The chip 800 shown in FIG. 15 includes a processor 810, and the processor 810 may invoke and run a computer program from a memory to implement the methods in the embodiments of the present application.

Optionally, as shown in FIG. 41, the chip 800 may further include a memory 820. The processor 810 may invoke and run a computer program from the memory 820 to implement the methods in the embodiments of the present application.

The memory 820 may be a separate device independent from the processor 810, or may be integrated into the processor 810.

Optionally, the chip 800 may further include an input interface 830. The processor 810 may control the input interface 830 to communicate with other devices or chips. Specifically, the input interface 830 may obtain information or data transmitted by other devices or chips.

Optionally, the chip 800 may further include an output interface 840. The processor 810 may control the output interface 840 to communicate with other devices or chips. Specifically, the output interface 840 may output information or data to other devices or chips.

Optionally, the chip may be applied to the network device in the embodiments of the present application, and the chip may implement the corresponding processes implemented by the network device in the various methods of the embodiments of the present application, which will not be repeated here for brevity.

Optionally, the chip may be applied to the mobile terminal/terminal device in the embodiments of the present application, and the chip may implement the corresponding processes implemented by the mobile terminal/terminal device in the various methods of the embodiments of the present application, which will not be repeated here for brevity.

It should be understood that the chip mentioned in the embodiments of the present application may also be called a system on chip, a system chip, a chip system or a system-on-chip chip, etc.

FIG. 16 is a schematic block diagram of a communication system 900 provided in the embodiments of the present application. As shown in FIG. 16, the communication system 900 includes a network device 910, a first terminal 920, and a second terminal 930.

The network device 910 may be used to implement the corresponding functions implemented by the network device in the above-mentioned methods, the first terminal 920 may be used to implement the corresponding functions implemented by the first terminal in the above-mentioned methods, and the second terminal 930 may be used to implement the corresponding functions implemented by the second terminal in the above-mentioned methods, which will not be repeated here for brevity.

It should be understood that the processor in the embodiments of the present application may be an integrated circuit chip and have a processing capability of signals. In the implementation process, various steps of the above method embodiments may be completed by an integrated logic circuit of hardware in the processor or instructions in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. Various methods, steps and logical block diagrams disclosed in the embodiments of the present application may be implemented or performed. The general-purpose processor may be a microprocessor, or the processor may also be any conventional processor, etc. The steps of the method disclosed in combination with the embodiments of the present application may be directly embodied as being performed and completed by a hardware decoding processor, or using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. By way of example but not limitative illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not be limited to, these and any other suitable types of memories.

It should be understood that the above memory is exemplary but not limiting illustration. For example, the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not be limited to, these and any other suitable types of memories.

The embodiments of the present application further provide a computer readable storage medium for storing a computer program.

Optionally, the computer readable storage medium may be applied to the network device in the embodiments of the present application, and the computer program causes a computer to perform the corresponding processes implemented by the network device in the various methods of the embodiments of the present application, which will not be repeated here for brevity.

Optionally, the computer readable storage medium may be applied to the first terminal in the embodiments of the present application, and the computer program causes a computer to perform the corresponding processes implemented by the first terminal in the various methods of the embodiments of the present application, which will not be repeated here for brevity.

Optionally, the computer readable storage medium may be applied to the second terminal in the embodiments of the present application, and the computer program causes a computer to perform the corresponding processes implemented by the second terminal in the various methods of the embodiments of the present application, which will not be repeated here for brevity.

The embodiments of the present application further provide a computer program product including computer program instructions.

Optionally, the computer program product may be applied to the network device in the embodiments of the present application, and the computer program instructions cause a computer to perform the corresponding processes implemented by the network device in the various methods of the embodiments of the present application, which will not be repeated here for brevity.

Optionally, the computer program product may be applied to the first terminal in the embodiments of the present application, and the computer program instructions cause a computer to perform the corresponding processes implemented by the first terminal in various methods of the embodiments of the present application, which will not be repeated here for brevity.

Optionally, the computer program product may be applied to the second terminal in the embodiments of the present application, and the computer program instructions cause a computer to perform the corresponding processes implemented by the second terminal in various methods of the embodiments of the present application, which will not be repeated here for brevity.

The embodiments of the present application further provide a computer program.

Optionally, the computer program may be applied to the network device in the embodiments of the present application, the computer program, when executed on a computer, causes the computer to perform the corresponding processes implemented by the network device in various methods of the embodiments of the present application, which will not be repeated here for brevity.

Optionally, the computer program may be applied to the first terminal in the embodiments of the present application, the computer program, when executed on a computer, causes the computer to perform the corresponding processes implemented by the first terminal in various methods of the embodiments of the present application, which will not be repeated here for brevity.

Optionally, the computer program may be applied to the second terminal in the embodiments of the present application, the computer program, when executed on a computer, causes the computer to perform the corresponding processes implemented by the second terminal in various methods of the embodiments of the present application, which will not be repeated here for brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application to implement the described functions, but such implementation should not be considered beyond the scope of the present application.

It may be clearly understood by those skilled in the art that, for convenience and brevity of the description, the specific working processes of the system, the apparatus and the unit described above may refer to the corresponding processes in the above method embodiments, which will not be repeated here.

In the several embodiments provided by the application, it should be understood that, the disclosed systems, apparatus, and method may be implemented in other ways. For example, the apparatus embodiments described above are only schematic. For example, division of the units is only division of logical functions, and there may be other division methods in an actual implementation. For example, a plurality of units or components may be combined or integrated into another system, or some features may be ignored or not performed. In addition, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units. That is, they may be located in one place, or may be distributed onto a plurality of network units. A part or all of the units may be selected according to actual needs, so as to implement the purpose of the solutions of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in the form of a software product. The computer software product is stored in a storage medium, and includes a plurality of instructions for causing a computer device (which may be a personal computer, a server, or a network device, etc.) to perform all or some of steps of the methods described in the various embodiments of the present application. The storage medium mentioned above includes a U disk, a mobile hard disk, a read-only memory (ROM), a random access memory (RAM), a diskette or an optical disk, or various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:
transmitting, by a first terminal based on a first signal, a second signal to a second terminal, wherein the second signal is used to supply power to the second terminal, and the first signal is transmitted by a network device or a third terminal.

2. The method according to claim 1, wherein the second signal is an amplified signal.

3. The method according to claim 1 or 2, wherein the second signal is an amplified signal of the first signal and is transmitted by the first terminal through backscatter processing.

4. The method according to claim 1 or 2, wherein the second signal is transmitted by the first terminal in an active transmission manner.

5. The method according to claim 4, wherein the second signal is transmitted based on a power that is obtained by the first terminal through performing power harvesting on the first signal.

6. The method according to claim 4 or 5, wherein the first signal is used to control the first terminal to transmit the second signal.

7. The method according to any one of claims 1 to 6, wherein a frequency of the second signal is the same as a frequency of the first signal.

8. The method according to any one of claims 1 to 6, wherein a frequency of the second signal and a frequency of the first signal have a first frequency offset.

9. The method according to any one of claims 1 to 8, wherein the second signal is transmitted based on first spatial information.

10. The method according to any one of claims 1 to 9, further comprising:
receiving, by the first terminal, first information transmitted by the network device, wherein the first information is used to control the first terminal to transmit the second signal.

11. The method according to claim 10, wherein the first information comprises at least one of:
spatial information of a power supply signal, transmission duration information of the power supply signal, or transmission power information of the power supply signal.

12. The method according to any one of claims 1 to 11, further comprising:
transmitting, by the first terminal, second information to the network device, wherein the second information is used to indicate capability information of the first terminal used for transmitting the second signal.

13. The method according to claim 12, wherein the second information comprises at least one of:
spatial information of a power supply signal supported to be transmitted by the first terminal;
transmission duration information of the power supply signal supported by the first terminal; or
transmission power information of the power supply signal supported by the first terminal.

14. The method according to any one of claims 1 to 13, wherein the first signal is transmitted periodically.

15. The method according to any one of claims 1 to 14, wherein the second signal is transmitted periodically.

16. The method according to any one of claims 1 to 15, further comprising:
receiving, by the first terminal, first request information from the second terminal, wherein the first request information is used to request the first terminal to transmit a power supply signal.

17. The method according to claim 16, wherein the first request information comprises at least one of:
a length of time of the power supply signal requested to be transmitted, a transmission period of the power supply signal requested to be transmitted, a strength of the power supply signal requested to be transmitted, spatial information of the power supply signal requested to be transmitted, a power harvesting capability of the second terminal, a type of a service to be transmitted by the second terminal, duration of the service to be transmitted by the second terminal, a data volume of the service to be transmitted by the second terminal, or first indication information, wherein the first indication information is used to indicate that the second terminal requests the first terminal to transmit the power supply signal or that there is data to be transmitted at the second terminal.

18. The method according to any one of claims 16 or 17, further comprising:
transmitting, by the first terminal, based on a third signal, a fourth signal, wherein the fourth signal is used to supply power to the second terminal, and the fourth signal is transmitted based on the first request information.

19. The method according to claim 18, wherein
a transmission period of the second signal is greater than a transmission period of the fourth signal; and/or
duration of the second signal is less than duration of the fourth signal.

20. A wireless communication method, comprising:
transmitting, by a network device, a first signal to a first terminal, wherein the first signal is used for the first terminal to transmit a second signal, and the second signal is used to supply power to a second terminal.

21. The method according to claim 20, wherein the first signal is transmitted periodically.

22. The method according to claim 20 or 21, further comprising:
transmitting, by the network device, first information to the first terminal, wherein the first information is used to control the first terminal to transmit the second signal.

23. The method according to claim 22, wherein the first information comprises at least one of:
spatial information of a power supply signal, transmission duration information of the power supply signal, or transmission power information of the power supply signal.

24. The method according to any one of claims 20 to 23, further comprising:
receiving, by the network device, second information transmitted by the first terminal, wherein the second information is used to indicate capability information of the first terminal used for transmitting the second signal.

25. The method according to claim 24, wherein the second information comprises at least one of:
spatial information of a power supply signal supported to be transmited by the first terminal;
transmission duration information of the power supply signal supported by the first terminal; or
transmission power information of the power supply signal supported by the first terminal.

26. The method according to any one of claims 20 to 25, further comprising:
receiving, by the network device, first request information transmitted by the second terminal, wherein the first request information is used to request the network device to transmit a power supply signal.

27. The method according to claim 26, further comprising:
transmitting, by the network device, a third signal to the first terminal, wherein the third signal is used for the first terminal to transmit a fourth signal, and the fourth signal is used to supply power to the second terminal.

28. The method according to claim 27, wherein the third signal is transmitted based on the first request information.

29. A wireless communication method, comprising:
transmitting, by a second terminal, first request information to a first terminal, wherein the first request information is used to request the first terminal to transmit a power supply signal.

30. The method according to claim 29, wherein the first request information comprises at least one of:
a length of time of the power supply signal requested to be transmitted, a transmission period of the power supply signal requested to be transmitted, a strength of the power supply signal requested to be transmitted, spatial information of the power supply signal requested to be transmitted, a power harvesting capability of the second terminal, a type of a service to be transmitted by the second terminal, duration of the service to be transmitted by the second terminal, a data volume of the service to be transmitted by the second terminal, or first indication information, wherein the first indication information is used to indicate that the second terminal requests the first terminal to transmit the power supply signal or that there is data to be transmitted at the second terminal.

31. The method according to claim 29 or 30, further comprising:
receiving, by the second terminal, a fourth signal transmitted by the first terminal, wherein the fourth signal is used for the second terminal to perform power harvesting.

32. The method according to claim 31, wherein the fourth signal is transmitted based on the first request information.

33. The method according to any one of claims 29 to 32, further comprising:
receiving, by the second terminal, a second signal transmitted by the first terminal, wherein the second signal is used for the second terminal to perform power harvesting.

34. The method according to claim 33, wherein the first request information is transmitted based on a power that is obtained by the first terminal through performing power harvesting on the second signal.

35. A terminal device, comprising:
a communication unit, configured to transmit a second signal to a second terminal based on a first signal, wherein the second signal is used to supply power to the second terminal, and the first signal is transmitted by a network device or a third terminal.

36. A network device, comprising:
a communication unit, configured to transmit a first signal to a first terminal, wherein the first signal is used for the first terminal to transmit a second signal, and the second signal is used to supply power to a second terminal.

37. A terminal device, comprising:
a communication unit, configured to transmit first request information to a first terminal, wherein the first request information is used to request the first terminal to transmit a power supply signal.

38. A terminal device, comprising a processor and a memory, wherein the memory is used to store a computer program, and the processor is used to invoke and run the computer program stored in the memory, to cause the terminal device to perform the method according to any one of claims 1 to 19.

39. A network device, comprising a processor and a memory, wherein the memory is used to store a computer program, and the processor is used to invoke and run the computer program stored in the memory, to cause the netowork device to perform the method according to any one of claims 20 to 28.

40. A terminal device, comprising a processor and a memory, wherein the memory is used to store a computer program, and the processor is used to invoke and run the computer program stored in the memory to perform the method according to any one of claims 29 to 34.

41. A chip, comprising a processor, wherein the processor is used to invoke and run a computer program from a memory to cause a device on which the chip is mounted to perform the method according to any one of claims 1 to 19, or the method according to any one of claims 20 to 28, or the method according to any one of claims 29 to 34.

42. A computer readable storage medium, wherein the computer readable storage medium is used to store a computer program, and the computer program causes a computer to perform the method according to any one of claims 1 to 19, or the method according to any one of claims 20 to 28, or the method according to any one of claims 29 to 34.

43. A computer program product, comprising computer program instructions, wherein the computer program instructions cause a computer to perform the method according to any one of claims 1 to 19, or the method according to any one of claims 20 to 28, or the method according to any one of claims 29 to 34.

44. A computer program, wherein the computer program causes a computer to perform the method according to any one of claims 1 to 19, or the method according to any one of claims 20 to 28, or the method according to any one of claims 29 to 34.
